# EUROPEAN PATENT SPECIFICATION

(11) **EP 1 272 792 B1**
(45) Date of publication and mention of the grant of the patent: **16.06.2004**
(21) Application number: 00976527.2
(22) Date of filing: 16.11.2000
(51) Int. Cl.: F16S 3/06, E04B 1/58

(54) **METHOD OF INTERCONNECTING RODS WHEN MOUNTING A FRAME STRUCTURE**
METHODE ZUR VERBINDUNG VON STÄBEN BEIM MONTIEREN EINER RAHMENSTRUKTUR
PROCEDE DE FIXATION DE BARRES LORS DU MONTAGE D'UNE STRUCTURE CADRE

(30) Priority: 11.04.2000 SE 0001317
(43) Date of publication of application: 08.01.2003
(73) Proprietor: PROFILGRUPPEN AB, 360 70 Aseda (SE)
(72) Inventor: BILEN, Gunnar, S-360 70 Aseda (SE)
(74) Representative: Andersson, Per-Olof
(86) International application number: PCT/SE2000/002247
(87) International publication number: WO 2001/077573

(56) References cited:
- EP-A2- 0 843 103
- DE-A- 1 802 638
- DE-A1- 3 823 941
- US-A- 3 799 685
- US-A- 4 960 343
- US-A- 5 435 110

## Description

### Technical Field

The present invention relates to a method of, when mounting a frame structure assembled from rod elements and rods, connecting a rod element to a rod at an arbitrary connection point along the length of the rod and at a predetermined angle in relation to the rod.

### Background of the Invention

In the mounting of various types of frame structures made of rods, such as scaffolding or frames of an entirely different type, for example for furniture, use is nowadays made of connecting means with a greater or lesser degree of complexity, or the rods, which are usually steel rods, are welded together with one another using conventional welding methods which bring about powerful heat action on the material in the rods and in doing so reduce the strength of the latter. These conventional welding methods are moreover relatively complicated because they require access to special welding equipment.

DE-3 823 941 describes a method of joining two rods by means of a connecting part, beads of the connecting part being inserted into grooves of one of the rods. The side walls of the grooves near the connecting part are deformed.

### Disclosure of the Invention

One object of the present invention is therefore to provide a method of connecting rod elements and rods together with one another for mounting a frame structure, which method is simple to implement and affords great freedom of choice as far as the relative positioning of the rod elements and the rods is concerned, and which method does not have any detrimental effect on the strength of the rod elements and the rods or require any extra welding equipment.

According to the invention, this object is achieved by a method of the type indicated in the introduction, which is characterised in
that a connecting part and a tubular part of essentially rectangular inner cross section are used as said rod element,
that an aluminium section provided during its manufacture with two longitudinal locking grooves is used as said rod,
that an aluminium sectional element, which has two mutually opposite legs with longitudinal locking beads, which have a cross-sectional shape corresponding to the cross-sectional shape of the locking grooves and suitable for pressing into the locking grooves for forming a cold press weld joint, is cut along two parallel cross-sectional planes which form said angle with the longitudinal direction of the aluminium sectional element and the distance between which is smaller than or the same as one inner cross-sectional dimension of the tubular part at right angles to two mutually opposite tube walls, in order to form the connecting part,
that the connecting part is arranged in such a manner on the aluminium section at said connection point that the locking beads on its two legs are positioned directly in front of the locking grooves of the aluminium section,
that the legs of the connecting part are deformed in such a manner that their locking beads are pressed into the respective locking grooves and thus form a cold press weld joint therein, the outside distance between the legs of the connecting part in the deformed state being smaller than or the same as the other inner cross-sectional dimension of the tubular part at right angles to two mutually opposite tube walls, and
that the tubular part is slipped over the connecting part.

A preferred method has the features that the aluminium section is provided with external locking grooves open in opposite directions, that the locking beads of the aluminium sectional element are directed towards one another and that the legs of the connecting part are deformed by being pressed towards one another, the outside distance between the legs of the connecting part in the compressed state being essentially the same as said other inner cross-sectional dimension of the tubular part.

Before the tubular part is slipped onto the connecting part, it is advantageously cut at one of its ends along a cross-sectional plane which forms said angle with the longitudinal direction of the tubular part, its end surface defined by this cross-sectional plane being brought into contact with the aluminium section when the tubular part is slipped onto the connecting part.

The distance between the two cross-sectional planes along which the aluminium sectional element is cut is preferably essentially the same as said one inner cross-sectional dimension of the tubular part.

The tubular part is suitably an aluminium section.

A tubular part which extends over the entire length of the rod element and a connecting part which extends over only a smaller part of this length can be used as said rod element.

Alternatively, a connecting part which extends over the entire length of the rod element and a tubular part which extends over only a smaller part of this length can be used as said rod element.

### Brief Description of the Drawings

The invention will now be described in greater detail by means of embodiments and with reference to the accompanying drawings, in which:
Fig. 1 is a perspective view and shows a connection between a rod element and a rod brought about in accordance with the method according to the invention;
Fig. 2 shows the connection shown in Fig. 1 from above;
Fig. 3 shows the connection shown in Fig. 1 from the side;
Fig. 4 shows an alternative connection from the side;
Fig. 5 is an end view and shows an aluminium section for making a connecting part belonging to the rod element;
Fig. 6 shows the aluminium section in the direction of the arrow VI in Fig. 5;
Fig. 7 is an end view and shows a tubular part belonging to the rod element;
Fig. 8 shows the tubular part in the direction of the arrow VIII in Fig. 7;
Fig. 9 shows the rod in an alternative embodiment and the connecting part in a first alternative embodiment;
Fig. 10 corresponds to Fig. 9 and shows the rod in the embodiment shown in Fig. 9 and the connecting part in a second alternative embodiment;
Fig. 11 is a perspective view corresponding to Fig. 1 and shows a connection brought about in accordance with the method according to the invention between a rod element in an alternative embodiment and a rod in the embodiment shown in Fig. 1;
Fig. 12 is an end view and shows an aluminium section for making a connecting part belonging to the rod element in Fig. 11, and
Fig. 13 shows the aluminium section in Fig. 12 in the direction of the arrow XIII in Fig. 12.

### Description of Preferred Embodiments

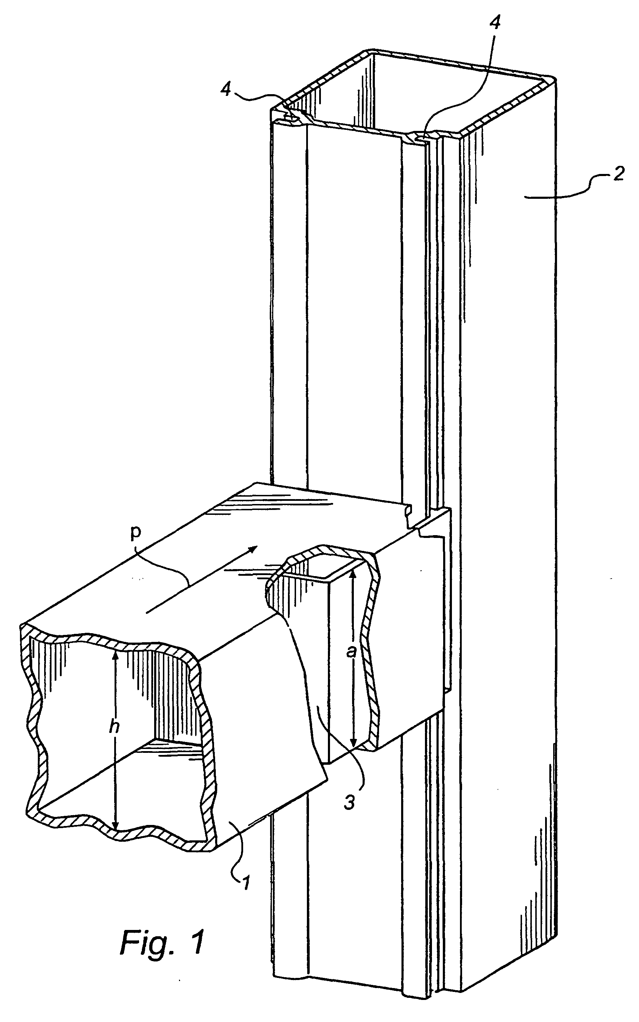

Figs 1-3 show a portion of a tubular part 1 which is connected to a rod 2, of which again only a portion is shown, by means of a connecting part 3. The tubular part 1 and the connecting part 3 together form a rod element 1, 3, the length of which is the same as the length of the tubular part 1. In Figs 1-3, the rod 2 is shown in a vertical position but it can of course adopt any position, and the rod element 1, 3 is shown in a position at right angles to the rod 2, that is to say a horizontal position.

The tubular part 1 has a rectangular (here square) inner cross section. The tubular part 1 suitably consists of an aluminium section but can also be made from a material other than aluminium, for example steel.

The rod 2 consists of an aluminium section, which here is tubular and has an essentially square cross section. Close to each of two mutually adjacent corners, the rod 2 has a locking groove 4 extending along the section. The locking grooves 4 are located directly in front of one another and are open in opposite directions.

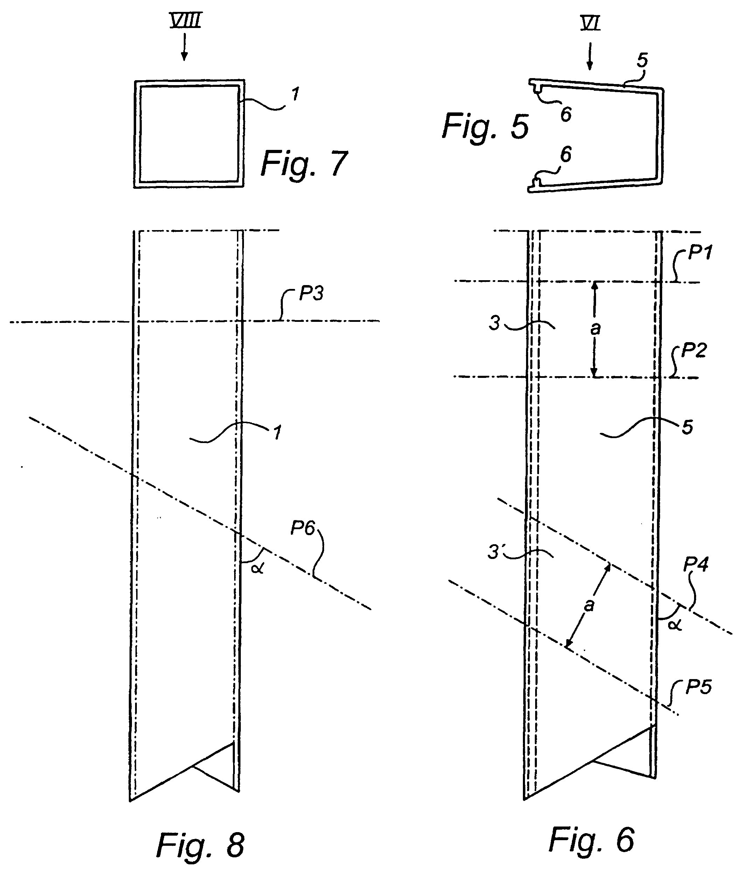

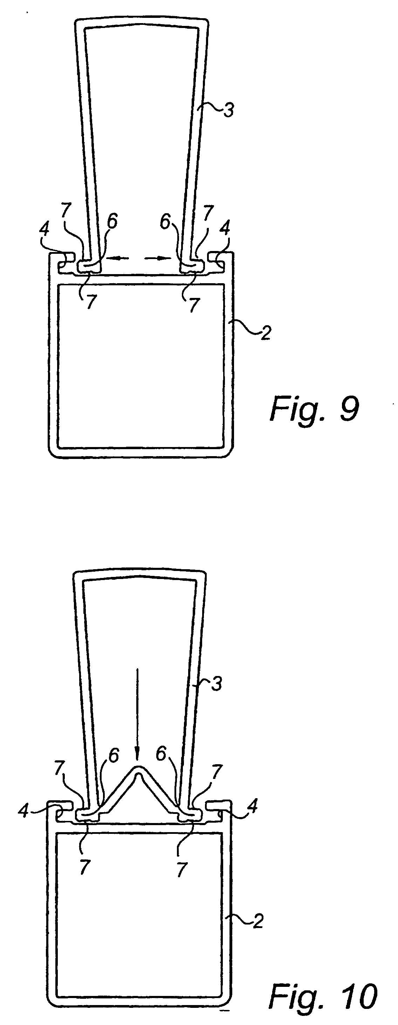

The connecting part 3 is made from a cross-sectionally essentially U-shaped aluminium sectional element 5 (see Figs 5 and 6). Close to its free end, each U-leg of the sectional element 5 has an internal locking bead 6 which extends along the sectional element 5. The locking beads 6 are located directly in front of one another and have a cross-sectional shape corresponding to the cross-sectional shape of the locking grooves 4 and suitable for pressing into the locking grooves for forming a cold press weld joint. For this purpose, each locking bead 6 is provided with longitudinal ribs 7 on both its sides. The ribs 7, which are of essentially triangular cross section, are shown in only Figs 9 and 10.

The connecting part 3 is made from the aluminium sectional element 5 by the latter being cut along two parallel cross-sectional planes P1 and P2 (see Fig. 6) which are at right angles to the longitudinal direction of the aluminium sectional element 5. In the embodiment shown in Figs 1-3, the distance a between the planes P1 and P2 is the same as the vertical, inner cross-sectional dimension or inside height h of the tubular part 1. It is generally true that a ≤ h.

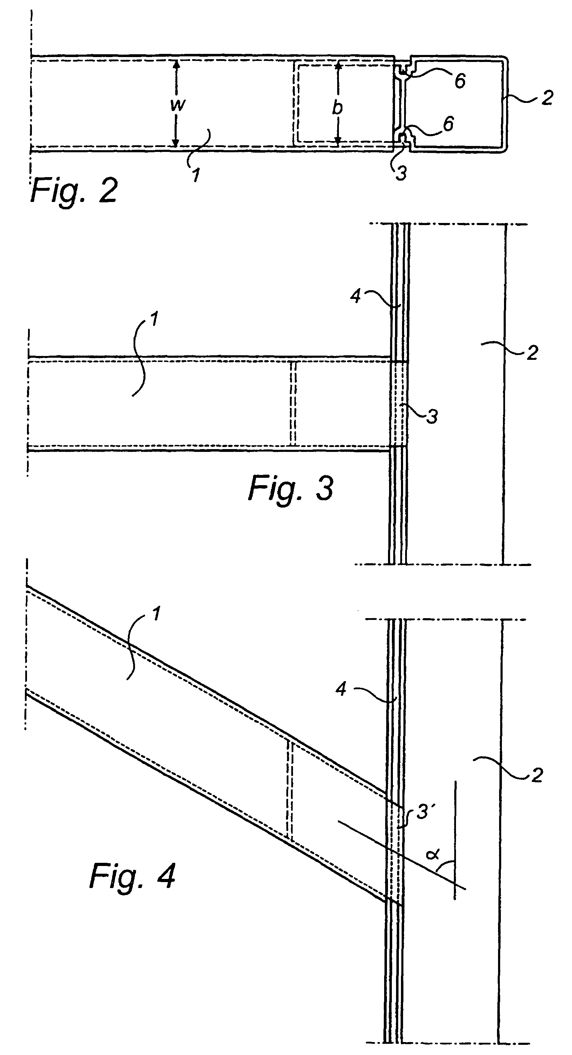

As can be seen from Fig. 5, the U-legs of the aluminium sectional element 5 and thus of the connecting part 3 diverge slightly in the direction towards the free ends of the legs. The U-legs diverge to such an extent that the connecting part 3 can, in the direction of the arrow P in Fig. 1, be moved towards the rod 2 at right angles to the latter into a position in which the locking beads 6 are located directly in front of their respective locking grooves 4. When the connecting part 3 has been moved into such a position at an arbitrary connection point along the length of the rod 2, its two U-legs are, by means of a suitable tool, pressed towards one another in such a manner that their locking beads 6 are pressed into the respective locking grooves 4 and thus form a cold press weld joint therein. In the pressed-in position, the U-legs are parallel to one another, and the outside distance b (see Fig. 2) between the U-legs is the same as the horizontal, inner cross-sectional dimension or inside width w (which is the same as the inside height h in the embodiment shown in Figs 1-3) of the tubular part 1. It is generally true that b ≤ w. As described in greater detail below, it is advantageous that b = w in the embodiment according to Figs 1-3.

The tubular part 1 is cut close to one of its ends along a cross-sectional plane P3 (see Fig. 8) which is at right angles to the longitudinal direction of the part 1. The tubular part 1 is then slipped, this end first, so far onto the connecting part 3 that its end surface defined by the cross-sectional plane P3 comes into contact with the rod 2.

At its opposite end, the tubular part 1 can be connected in the same manner to a second rod (not shown) corresponding to the rod 2.

The connection produced by the cold press weld joints between the connecting part 3 and the rod 2 provides secure fixing of the connecting part 3 in the longitudinal direction of the rod 2. The locking grooves 4 and the locking beads 6 provide secure fixing in the transverse direction of the rod 2. A particularly rotationproof connection is obtained by virtue of the fact that the tubular part 1 is slipped over the connecting part 3 and, as a result of its inside width w being the same as the outside width b of the connecting part 3 in the compressed state, ensures that the locking beads 6 are retained in the locking grooves 4.

The embodiment shown in Fig. 4 differs from the embodiment shown in Figs 1-3 in that the tubular part 1 forms an angle α different from 90° with the rod 2. In the embodiment according to Fig. 4, the connecting part 3' differs slightly from the connecting part 3 in the embodiment according to Figs 1-3. The connecting part 3' is also made by the aluminium sectional element 5 being cut along two parallel cross-sectional planes P4 and P5 (see Fig. 6), the distance between which is a. However, the cross-sectional planes P4 and P5 are not at right angles to the longitudinal direction of the aluminium sectional element 5 but form the angle α with it. In the embodiment according to Fig. 4, the tubular part 1 is cut close to one of its ends along a cross-sectional plane P6 (see Fig. 8) which forms the angle α with the longitudinal direction of the part 1. In the connection according to Fig. 4, the end surface of the tubular part 1 defined by the cross-sectional plane P6 makes contact with the rod 2.

The embodiments shown in Figs 9 and 10 differ from the embodiments described above in that the openings of the locking grooves 4 formed in the rod 2 are directed towards one another and not away from one another and in that, accordingly, the locking beads 6 of the connecting part 3 are directed away from one another and not towards one another. The U-legs of the connecting part 3 converge here in the direction towards their free ends which, in the embodiment according to Fig. 10, are interconnected by means of a deformable, V-shaped bridge 8. The connecting part 3 is positioned in the manner shown in Figs 9 and 10 at an arbitrary connection point along the rod 2, whereupon it is deformed in such a manner (see the arrows in Figs 9 and 10) that the locking beads 6 are inserted into the locking grooves 4 and thus form a cold press weld joint. In the embodiment shown in Fig. 10, the bridge 8, which is straightened out after deformation, performs the anti-rotation function performed by the tubular part 1 in the embodiments according to Figs 1-4. In the embodiment according to Fig. 9, this anti-rotation function can be brought about by virtue of a distance piece (not shown) being installed between the moved-apart U-legs of the connecting part 3.

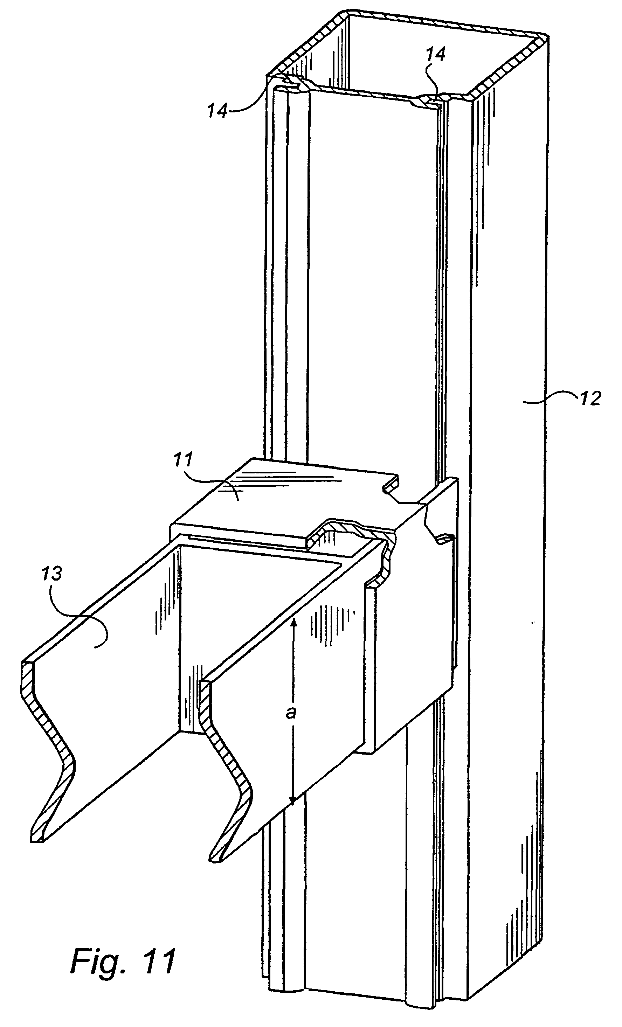

Fig. 11 shows a portion of a rod element 11, 13 which consists of a tubular part 11 and a connecting part 13 and is connected to a rod 12, of which again only a portion is shown. The rod element 11, 13 differs from the rod element 1, 3 shown in Fig. 1 in that the connecting part 13 extends over the entire length of the rod element, while the tubular part 11 is in the form of a short sleeve. In Fig. 11, the rod 12 is shown in a vertical position but, like the rod 2 in Fig. 1, it can of course adopt any position, and the rod element 11, 13 is shown in a position at right angles to the rod 12, that is to say a horizontal position.

Apart from the length, the tubular part 11 has the same shape and dimensions as the tubular part 1 and is made from a similar sectional element to that from which the latter is made.

The rod 12 is identical to the rod 2 and, like the latter, consists of an aluminium section which is provided with locking grooves 14.

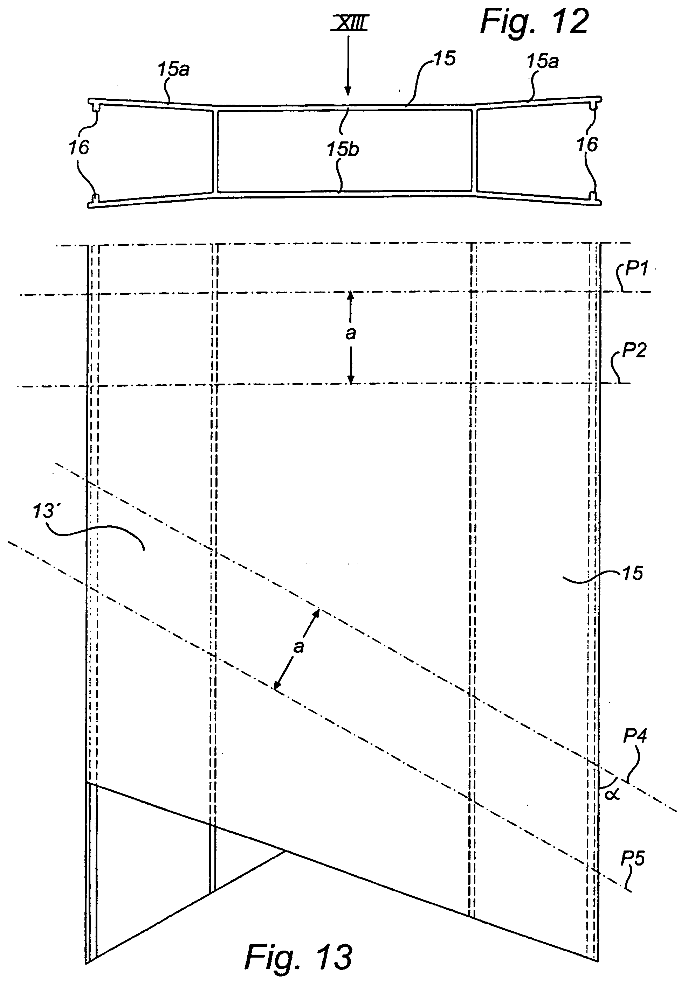

The connecting part 13 is made from an aluminium sectional element 15 (see Figs 12 and 13) which differs from the aluminium sectional element 5 from which the connecting part 3 is made. On each of its two sides, the sectional element 15 has a connecting portion 15a which has the same shape and dimensions as the sectional element 5. Each connecting portion 15a therefore has two locking beads 16 located directly in front of one another with a cross-sectional shape corresponding to the cross-sectional shape of the locking grooves 14 and suitable for pressing into the locking grooves for forming a cold press weld joint. The two connecting portions 15a are interconnected by means of two web portions 15b.

The connecting part 13 is made from the aluminium sectional element 15 by the latter being cut, in the same manner as the aluminium sectional element 5, along two parallel cross-sectional planes P1 and P2 (see Fig. 13) which are at right angles to the longitudinal direction of the aluminium sectional element 15. The distance a between the planes P1 and P2 is here once more the same as the vertical, inner cross-sectional dimension or inside height (h) of the tubular part 11. The connection shown in Fig. 11 is brought about in the same manner as the connection shown in Fig. 1, for which reason the procedure is not described again. The tubular part 11 is slipped over the connecting part 13 and brought into contact with the rod 12, whereupon it is fixed in this position by means of, for example, a punch mark. In the example shown, the tubular part 11 is, as can be seen from Fig. 11, essentially the same length as the legs of the connecting portion 15a.

In the same manner as the rod element 1, 3' in Fig. 4, the rod element 11, 13 can form an angle α different from 90° with the rod 12. In such an embodiment corresponding to Fig. 4, the connecting part 13' is also made by the aluminium sectional element 15 being cut along two parallel cross-sectional planes P4 and P5, the distance between which is a and which form the angle α with the longitudinal direction of the sectional element 15 (see Fig. 13). The tubular part 11 is then also, at one of its ends, cut along a cross-sectional plane which forms the angle α with the longitudinal direction of the part 11 (cf. plane P6 in Fig. 8).

## Claims

1. A method of, when mounting a frame structure assembled from rod elements (1, 3; 11, 13) and rods (2; 2), connecting a rod element (1, 3; 11, 13) to a rod 2; 12) at an arbitrary connection point along the length of the rod and at a predetermined angle (α) in relation to the rod,
**characterised in**
**that** a connecting part (3; 13) and a tubular part (1; 11) of essentially rectangular inner cross section are used as said rod element,
**that** an aluminium section (2; 12) provided during its manufacture with two longitudinal locking grooves (4; 4) is used as said rod,
**that** an aluminium sectional element (5; 15) which has two mutually opposite legs with longitudinal locking beads (6; 16), which have a cross-sectional shape corresponding to the cross-sectional shape of the locking grooves (4; 14) and suitable for pressing into the locking grooves for forming a cold press weld joint, is cut along two parallel cross-sectional planes (P1, P2; P4, P5) which form said angle (α) with the longitudinal direction of the aluminium sectional element (5; 15) and the distance (a) between which is smaller than or the same as one inner cross-sectional dimension (h) of the tubular part (1; 11) at right angles to two mutually opposite tube walls, in order to form the connecting part (3; 13),
**that** the connecting part (3; 13) is arranged in such a manner on the aluminium section (2; 12) at said connection point that the locking beads (6; 16) on its two legs are positioned directly in front of the locking grooves (4; 14) of the aluminium section (2; 12),
**that** the legs of the connecting part (3; 13) are deformed in such a manner that their locking beads (6; 16) are pressed into the respective locking grooves (4; 14) and thus form a cold press weld joint therein, the outside distance between the legs of the connecting part in the deformed state being smaller than or the same as the other inner cross-sectional dimension (w) of the tubular part (1; 11) at right angles to two mutually opposite tube walls, and
**that** the tubular part (1; 11) is slipped over the connecting part (3; 13).

2. A method according to claim 1, **characterised in that** the aluminium section (2; 12) is provided with external locking grooves (4; 14) open in opposite directions, that the locking beads (6; 16) of the aluminium sectional element (5; 15) are directed towards one another, and that the legs of the connecting part (3; 13) are deformed by being pressed towards one another, the outside distance between the legs of the connecting part (3; 13) in the compressed state being essentially the same as said other inner cross-sectional dimension (w) of the tubular part (1; 11).

3. A method according to claim 1 or 2, **characterised in that**, before the tubular part (1; 11) is slipped onto the connecting part (3; 13), it is cut at one of its ends along a cross-sectional plane (P3; P6) which forms said angle (α) with the longitudinal direction of the tubular part (1; 11), and that its end surface defined by this cross-sectional plane (P3; P6) is brought into contact with the aluminium section (2; 12) when the tubular part (1; 11) is slipped onto the connecting part (3; 13).

4. A method according to any one of claims 1-3, **characterised in that** the distance (a) between the two cross-sectional planes (P1, P2; P4, P5) along which the aluminium sectional element (5; 15) is cut is essentially the same as said one inner cross-sectional dimension (h) of the tubular part (1; 11).

5. A method according to any one of claims 1-4, **characterised in that** the tubular part (1; 11) is an aluminium section.

6. A method according to any one of claims 1-5, **characterised in that** a tubular part (1) which extends over the entire length of the rod element and a connecting part (3) which extends over only a smaller part of this length are used as said rod element.

7. A method according to any one of claims 1-5, **characterised in that** a connecting part (13) which extends over the entire length of the rod element and a tubular part (11) which extends over only a smaller part of this length are used as said rod element.

## Patentansprüche

1. Verfahren zur Verbinden eines Stangenelementes (1, 3; 11, 13) mit einer Stange (2; 12) an einem beliebigen Verbindungspunkt über die Länge der Stange und in einem vorgegebenen Winkel (α) in Bezug auf die Stange beim Montieren einer Rahmenstruktur, die aus Stangenelementen (1, 3; 11, 13) und Stangen (2; 12) zusammengesetzt sind, **dadurch gekennzeichnet, dass**
ein Verbindungsteil (3; 13) und ein röhrenförmiger Teil (1; 11) mit im Wesentlichen rechteckigen inneren Querschnitt als das Stangenelement verwendet werden,
ein Aluminiumprofil (2; 12), das bei seiner Herstellung mit zwei Längs-Arretiernuten (4; 4) versehen wird, als die Stange verwendet wird,
ein Aluminium-Profilelement (5; 15), das zwei einander gegenüberliegende Schenkel mit Längs-Arretierwulsten (6; 16) hat, die eine Querschnittsform haben, die der Querschnittsform der Arretiernut (4; 14) entspricht, und die sich zum Einpressen in die Arretiernuten eignen, um eine Kaltpressschweiss-Verbindung zu erzeugen, entlang zweier paralleler Schnittebenen (P1, P2; P4, P5) geschnitten wird, die den Winkel (α) zur Längsrichtung des Aluminium-Profilelementes (5; 15) bilden, wobei ein Abstand (a) zwischen ihnen kleiner ist als eine innere Querschnittsabmessung (h) des röhrenförmigen Teils (1; 11) im rechten Winkel zu zwei einander gegenüberliegenden Röhrenwänden, oder dieser entspricht, um das Verbindungsteil (3; 13) zu bilden,
das Verbindungsteil (3; 13) so an dem Aluminiumprofil (2; 12) an dem Verbindungspunkt angeordnet ist, dass sich die Arretierwulste (6; 16) an seinen zwei Schenkeln direkt vor den Arretiernuten (4; 14) des Aluminiumprofils (2; 12) befinden,
die Schenkel des Verbindungsteils (3; 13) so verformt werden, dass ihre Arretierwulste (6; 16) in die entsprechenden Arretiernuten (4; 14) gepresst werden und so eine Kaltpressschweiß-Verbindung darin bilden, wobei der Außenabstand zwischen den Schenkeln des Verbindungsteils im verformten Zustand kleiner ist als die innere Querschnittsabmessung (w) des röhrenförmigen Teils (1; 11) im rechten Winkel zu zwei einander gegenüberliegenden Röhrenwänden oder dieser entspricht, und
das röhrenförmige Teil (1; 11) über das Verbindungsteil (3; 13) geschoben wird.

2. Verfahren nach Anspruch 1, **dadurch gekennzeichnet, dass** das Aluminiumprofil (2; 12) mit äußeren Arretiernuten (4; 14) versehen ist, die in einander entgegengesetzte Richtungen offen sind, dass die Arretierwulste (6; 16) des Aluminium-Profilelementes (5; 15) aufeinander zu gerichtet sind und dass die Schenkel des Verbindungsteils (3; 13) verformt werden, indem sie aufeinander zugedrückt werden, wobei der Außenabstand zwischen den Schenkeln des Verbindungsteils (3; 13) in dem zusammengedrückten Zustand im Wesentlichen der gleiche ist wie die andere innere Querschnittsabmessung (w) des röhrenförmigen Teils (1; 11).

3. Verfahren nach Anspruch 1 oder 2, **dadurch gekennzeichnet, dass**, bevor das röhrenförmige Teil (1; 11) auf das Verbindungsteil (3; 13) geschoben wird, es an einem seiner Enden entlang einer Querschnittsebene (P3; P6) geschnitten wird, die den Winkel (α) zu der Längsrichtung des röhrenförmigen Teils (1; 11) bildet, und dass seine Abflussfläche, die durch diese Querschnittsebene (P3; P6) gebildet wird, mit dem Aluminiumprofil (2; 12) in Kontakt gebracht wird, wenn das röhrenförmige Teil (1; 11) auf den Verbindungsteil (3; 13) geschoben wird.

4. Verfahren nach einem der Ansprüche 1-3, **dadurch gekennzeichnet, dass** der Abstand (a) zwischen den zwei Querschnittsebenen (P1, P2; P4, P5), entlang derer das Aluminium-Profilelement (5; 15) geschnitten wird, im Wesentlichen der inneren Querschnittsabmessung (h) des röhrenförmigen Teils (1; 11) entspricht.

5. Verfahren nach einem der Ansprüche 1-4, **dadurch gekennzeichnet, dass** das röhrenförmige Teil (1; 11) ein Aluminiumprofil ist.

6. Verfahren nach einem der Ansprüche 1-5, **dadurch gekennzeichnet, dass** ein röhrenförmiges Teil (1), das sich über die gesamte Länge des Stangenelementes erstreckt, und ein Verbindungsteil (3), das sich lediglich über einen kleineren Teil dieser Länge erstreckt, als das Stangenelement verwendet werden.

7. Verfahren nach einem der Ansprüche 1-5, **dadurch gekennzeichnet, dass** ein Verbindungsteil (13), das sich über die gesamte Länge des Stangenelementes erstreckt, und ein röhrenförmiges Teil (11), das sich über lediglich einen geringeren Teil dieser Länge erstreckt, als das Stangenelement eingesetzt werden.

## Revendications

1. Procédé pour, lors du montage d'un bâti à partir d'éléments de barre (1, 3; 11, 13) et de barres (2; 2), relier un élément de barre (1, 3; 11, 13) à une barre (2; 12) en un point de liaison arbitraire sur la longueur de la barre et avec un angle préalablement déterminé (α) par rapport à la barre,
**caractérisé**
**en ce qu'**une partie de liaison (3; 13) et une partie tubulaire (1; 11) de section transversale sensiblement rectangulaire sont utilisées comme ledit élément de barre,
**en ce qu'**une section en aluminium (2; 12) munie pendant sa fabrication de deux rainures de blocage longitudinales (4; 4) est utilisée comme ladite barre,
**en ce qu'**un élément démontable en aluminium (5; 15) qui a deux pattes mutuellement opposées avec des nervures de blocage longitudinales (6; 16), qui a une section transversale de forme correspondant à la forme en section droite des rainures de blocage (4; 14) et convenant pour être pressées dans les rainures de blocage pour former un joint soudé par pression à froid, est coupé le long de deux plans de sections transversales parallèles (P1, P2; P4, P5) qui forment ledit angle (α) avec la direction longitudinale de l'élément démontable en aluminium (5; 15) et la distance (a) entre eux est inférieure ou égale à la dimension d'une section transversale intérieure (h) de la partie tubulaire (1; 11) à angles droits avec deux parois de tube mutuellement opposées, afin de former la partie de connexion (3; 13),
**en ce que** la partie de liaison (3; 13) est agencée de telle manière sur la section en aluminium (2; 12) au dit point de liaison que les nervures de blocage (6; 16) sur ses deux pattes sont positionnées directement en face des rainures de blocage (4; 14) de la section en aluminium (2; 12),
**en ce que** les pattes de la partie de liaison (3; 13) sont déformées de telle manière que leurs nervures de blocage (6; 16) sont pressées dans les rainures de blocage respectives (4; 14) et donc forment un joint soudé par pression à froid dans celles-ci, la distance extérieure entre les pattes de la partie de liaison dans l'état déformé étant inférieure ou égale à l'autre dimension intérieure en section droite (w) de la partie tubulaire (1; 11) à angles droits vers deux parois de tube mutuellement opposées, et
**en ce que** la partie tubulaire (1; 11) est coulissée sur la partie de liaison (3; 13).

2. Procédé selon la revendication 1, **caractérisé en ce que** la section en aluminium (2; 12) est munie de rainures de blocage extérieures (4; 14) ouvertes dans des directions opposées, que les nervures de blocage (6; 16) de l'élément démontable en aluminium (5; 15) sont dirigés l'une vers l'autre, et que les pattes de la partie de liaison (3; 13) sont déformées en étant pressées l'une vers l'autre, la distance extérieure entre les pattes des la partie de liaison (3; 13) dans l'état comprimé étant sensiblement la même que ladite autre dimension intérieure en section droite (w) de la partie tubulaire (1; 11).

3. Procédé selon la revendication 1 ou 2, **caractérisé en ce que**, avant que la partie tubulaire (1; 11) soit coulissée sur la partie de liaison (3; 13), elle est coupée en une de ses extrémités le long d'un plan en section droite (P3; P6) qui forme ledit angle (α) avec la direction longitudinale de la partie tubulaire (1; 11), et **en ce que** sa surface d'extrémité définie par ce plan en section droite (P3; P6) est amenée en contact avec la section en aluminium (2; 12) quand la partie tubulaire (1; 11) est coulissée sur la partie de liaison (3; 13).

4. Procédé selon l'une quelconque des revendications 1 à 3, **caractérisé en ce que** la distance (a) entre les deux plans en section droite (P1, P2; P4, P5) le long desquels l'élément démontable en aluminium (5; 15) est coupé est sensiblement la même que ladite une dimension intérieure en section droite (h) de la partie tubulaire (1; 11).

5. Procédé selon l'une quelconque des revendications 1 à 4, **caractérisé en ce que** la partie tubulaire (1; 11) est une section en aluminium.

6. Procédé selon l'une quelconque des revendications 1 à 5, **caractérisé en ce qu'**une partie tubulaire (1) qui s'étend sur toute la longueur de l'élément de barre et une partie de liaison (3) qui s'étend sur une petite partie seulement de cette longueur sont utilisées comme élément de barre.

7. Procédé selon l'une quelconque des revendications 1 à 5, **caractérisé en ce qu'**une partie de liaison (13) qui s'étend sur toute la longueur de l'élément de barre et une partie tubulaire (11) qui s'étend sur seulement une petite partie de cette longueur sont utilisées comme ledit élément de barre.
